# EUROPEAN PATENT SPECIFICATION

(11) **EP 1 883 905 B1**
(45) Date of publication and mention of the grant of the patent: **03.07.2013**
(21) Application number: 06733465.6
(22) Date of filing: 04.05.2006
(51) Int. Cl.: G07C 5/00, H04L 29/06, H04L 29/08, H04Q 9/00

(54) **TRANSMISSION OF VEHICLE RELATED DATA BETWEEN A VEHICLE AND A VEHICLE SUPPORT CENTRE**
ÜBERTRAGUNG VON FAHRZEUGBEZOGENEN DATEN ZWISCHEN EINEM FAHRZEUG UND EINER FAHRZEUGUNTERSTÜTZUNGSZENTRALE
TRANSMISSION DE DONNÉES D'UN VÉHICULE ENTRE UN VÉHICULE ET UN CENTRE DE SUPPORT TECHNIQUE DU VÉHICULE

(30) Priority: 10.05.2005 SE 0501073
(43) Date of publication of application: 06.02.2008
(73) Proprietor: Scania CV AB (PUBL), 151 87 Södertälje (SE)
(72) Inventor: NARVINGER, Tobias, S-116 41 Stockholm (SE); WALLIN, Tomas, S-175 43 Järfälla (SE); PALMQVIST, Fredrik, S-741 92 Knivsta (SE)
(74) Representative: Sjögren Paulsson, Stina
(86) International application number: PCT/SE2006/050095
(87) International publication number: WO 2006/121401

(56) References cited:
- EP-A2- 1 420 518
- WO-A1-2004/112280
- US-A- 5 841 984
- US-A1- 2001 012 301
- US-A1- 2002 150 050
- US-A1- 2004 204 032
- US-B1- 6 526 341
- US-B1- 6 697 364

## Description

### TECHNICAL FIELD OF THE INVENTION

The present invention generally relates to the field of vehicles and the transmission of vehicle related data between vehicles and vehicle support centres. More particularly the invention relates to a method, message handling device, vehicle, vehicle support centre, computer program product and signal for transmission of vehicle related data between vehicles and vehicle support centres.

### DESCRIPTION OF RELATED ART

In the field of vehicles and especially the field of transport vehicles there is an ever increasing need to transmit data between the vehicle and a vehicle support centre. The type of data transmitted can typically be transport order data, like for instance information sent from the support centre to the vehicle regarding where and when different shipments are to be made. It is also of interest to transfer for instance driver log information, like information about the activities that a driver has performed during the execution of a transport order, like when he has been active, rested etc and where he is located at different instances in time. It is furthermore of interest to also supply information about the vehicle to the vehicle support centre in order to for instance in time identify possible faults and malfunctions in the vehicle.

Because of the mobile nature of such vehicles the communication normally has to be wireless.

One example of a system for transferring information from a vehicle to a support centre is given in WO-01/033868, where data is transmitted in the form of an XML or an HTML document between the vehicle and the centre.

However the costs associated with wireless transmission are today considerably higher than the costs associated with landline transmission. There is therefore a need for reducing the amount of data transmitted between vehicle and support centre. In many systems charging is based on the amount of data transmitted. It can also be based on a charge for each message. Some of these messages furthermore have a small fixed size, which means that the number of messages sent can be very high. This means that data transmissions can be very costly and then especially for the vehicle operator. A further benefit of data reduction is that it lowers the load on the network used.

Because of this there has been provided measures for reducing the amount of data transmitted.

In US 6,526,341 one such measure is described. Here a vehicle driver log is created at a server for a vehicle. Data for the log is provided in a macro having a number of prespecified fields for each type of data to be sent. In this way a type of data can immediately be determined based on the fixed positions in the macro. Thus it is possible to only transmit data, where the position of the data indicates the type. This provides a certain data size reduction.

However, also here the size of messages including data might still be too large, especially if there are many fields that include no real information, i.e. are blank.

There is thus a need for a way to enable further reduction of the amount of data transmitted between a vehicle and a vehicle support centre.

### SUMMARY OF THE INVENTION

One object of the present invention is to solve the problem of providing a way to transmit data between a vehicle and a vehicle support centre that allows the provision of an enhanced reduction of the amount of data transmitted.

According to one aspect of the present invention, this object is achieved by method of transmitting vehicle related data between a vehicle and a vehicle support centre via a wireless network, comprising the steps of:
providing an allocation field including settable allocation indicators, each corresponding to a different type of data to be transmitted between the vehicle and the vehicle support centre,
setting at least one allocation indicator in said allocation field for a corresponding type of data,
creating a data segment comprising at least said allocation field and a number of data fields, where the number is based on said allocation indicator setting,
allocating each data field to a type of data in accordance with said allocation indicator setting,
filling each data field with data of the allocated type, and
transmitting a data message between the vehicle and vehicle support centre at least comprising said segment.

According to another aspect of the present invention, this object is also achieved by a message handling device for providing transmission of vehicle related data between a vehicle and a vehicle support centre via a wireless network comprising:
a communication unit for communication using the wireless network, and
a control unit arranged to
   provide an allocation field including settable allocation indicators, each corresponding to a type of data to be transmitted between the vehicle and the vehicle support centre,
   set at least one allocation indicator in said allocation field for a corresponding type of data,
   create a data segment comprising at least said allocation field and a number of data fields, where the number is based on said allocation indicator setting,
   allocate each data field to a type of data in accordance with said allocation indicator setting,
   fill each data field with data of the allocated type, and order said communication unit to transmit a data message between the vehicle and the vehicle support centre at least comprising said segment.

According to a further aspect of the present invention, the message handling device is provided in a vehicle.

According to yet another aspect of the present invention the message handling device is provided in a vehicle support centre.

According to another aspect of the present invention, this object is also achieved by a computer program product for enabling transmission of vehicle related data between a vehicle and a vehicle support centre via a wireless network and comprising computer program code to make a computer perform, when said computer program code is loaded therein:
provide an allocation field including settable allocation indicators, each corresponding to a different type of data to be transmitted between the vehicle and the vehicle support centre,
set at least one allocation indicator in said allocation field for a corresponding type of data,
create a data segment comprising at least said allocation field and a number of data fields, where the number is based on said allocation indicator setting,
allocate each data field to a type of data in accordance with said allocation indicator setting,
fill each data field with data of the allocated type, and
at least order transmission of a data message between the vehicle and the vehicle support centre at least comprising said segment.

The invention is furthermore directed towards a signal transmitting vehicle related data between a vehicle and a vehicle support centre via a wireless network, said signal comprising:
at least one data segment including
   an allocation field having settable allocation indicators corresponding to different types of data that can be transmitted between the vehicle and the vehicle support centre, where at least one allocation indicator in said allocation field has been set for a corresponding type of data, and
   a number of data fields, where the number is based on said allocation indicator setting and each data field has been allocated to and filled with data of a type in accordance with said allocation indicator setting.

According to one variation of the present invention the allocation indicators of the allocation field are provided in a certain order and when more than one allocation indicator is set each data field is allocated to a type of data in an order that corresponds to the order in which the set allocation indicators follow each other. This has the advantage of allowing further downsizing of transmitted data and simplifying identification of to what type of data a data field has been allocated.

According to another variation of the present invention, a data message having a segment with an allocation field where at least one allocation indicator has been set is received. This allocation indicator setting is then used in a response message. This has the advantage of allowing queries regarding certain types of data in a simple manner and providing a response that is compact in size.

According to yet another variation of the present invention an access identification field is associated with said allocation field, where one access indicator is provided for each allocation indicator. Only access indicators corresponding to set allocation indicators can here be set. This has the advantage of allowing a receiving party to edit data in a data field and also provides the information that a field is editable in a compact way.

According to a further variation of the present invention a segment where data of a certain type is first provided comprises this data in the form of an absolute value and data of the same type in data fields in later segments are provided as deviations from this absolute value. This measure allows a further reduction of the amount o data transmitted.

According to yet a further variation of the present invention the messages comprise message identities, which together with storing of transmitted data messages, allows simple retransmission of lost data messages.

Another variation of the present invention is directed towards identifying an identity of the wireless network, comparing the identity with a network preference setting and determining whether the message is to be transmitted or not in dependence of the comparison. The advantage of this is that messages can be kept on hold for transmission until a vehicle reaches a preferred network. In this way it is possible to further cut down on data transmission costs.

The invention has a number of advantages. The amount of data transmitted is reduced. This also reduces the costs associated with data transmission. It also allows a dynamic and flexible structure for sending of data in that it allows allocation of fields to types of data based on need. Data fields are thus not reserved for a type of data not needed. The use of allocation fields provides for a simple indication of type of data. It is possible to provide this with only a minimum amount of extra information. Because of the lower amount of data, the traffic load on the network is also reduced.

### BRIEF DESCRIPTION OF THE DRAWINGS

The present invention will now be described in more detail in relation to the enclosed drawings, in which:
fig. 1 schematically shows a vehicle connected to a vehicle support centre via a wireless network,
fig. 2 shows a block schematic of parts within the vehicle that are relevant for the present invention,
fig. 3 shows a block schematic of parts within the vehicle support centre that are relevant for the present invention,
fig. 4 schematically shows a data segment, the structure of which is used in messages sent between a vehicle and a vehicle support centre,
fig. 5 shows the general outline of a first message according to the present invention sent from the vehicle to the vehicle support centre in a first communication scenario,
fig. 6 shows a flow chart of a method according to the present invention provided in relation to the first communication scenario,
fig. 7 shows the general outline of a second message according to the present invention sent from the vehicle support centre to the vehicle in a second communication scenario,
fig. 8 shows a flow chart of a method according to the present invention provided in the vehicle support centre in the second communication scenario,
fig. 9 shows a flow chart of a method according to the present invention provided in the vehicle in the second communication scenario, and
fig. 10 schematically shows a computer program product in the form of a CD ROM disc comprising computer program code for performing the present invention.

### DETAILED DESCRIPTION OF EMBODIMENTS

The present invention is directed towards providing communication between a vehicle and a vehicle support centre. There are a number of situations where this type of communication might be necessary. One such situation is for the transmission of transport orders and the reporting of the status of the vehicle and driver in relation to that order. Another situation is the transmission of driver log information between the vehicle and vehicle support centre and a third is the report of status concerning the vehicle, like for instance how it is working and if any components are faulty etc.

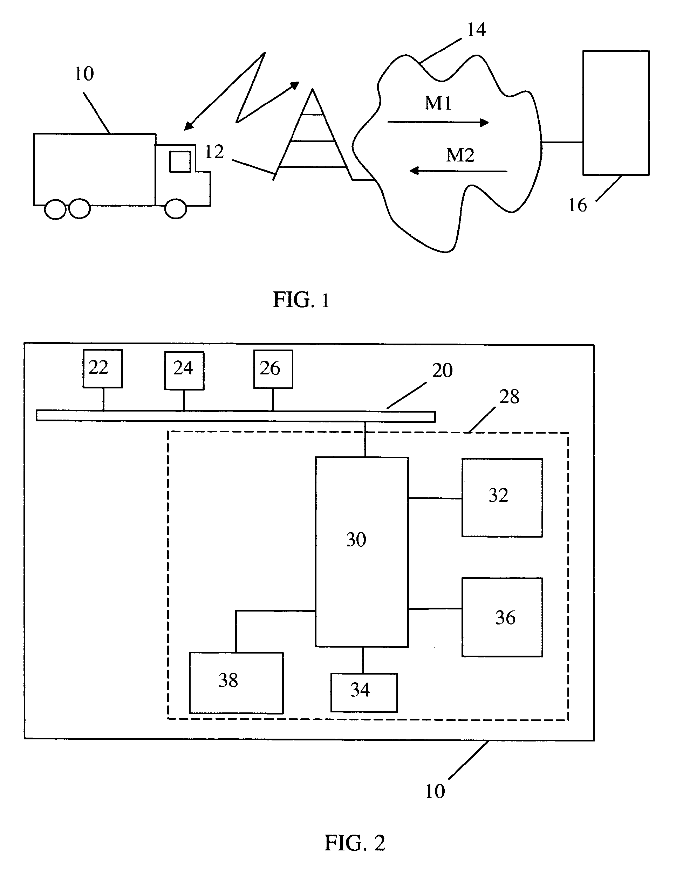

Fig. 1 shows a block schematic of a vehicle 10 connected to a vehicle support centre 16 via a wireless network 14. The network 14 is in an exemplifying embodiment a GSM network, why the vehicle communicates with this network via a base station 12. In the drawing a first message M1 sent from the vehicle 10 to the vehicle support centre 16 and a second message M2 sent from the vehicle support centre 16 to the vehicle 10 are also shown. The nature of these messages will be described shortly in relation to two different communication scenarios. In the embodiments to be described later the messages will be sent using SMS. The network need however not be a GSM network, but can be any other type of wireless network like for instance a GPRS network, a UMTS network or a wireless LAN network. From this it is evident that the messages are not limited to SMS messages but can be provided via any type of data connection supported by such a network, for instance a UDP connection. What is important is that the network allows the transmission of digital messages to and from the vehicle.

Fig. 2 shows a block schematic of the vehicle 10 and the parts of it that are relevant to the present invention. The vehicle includes a data bus 20, which may be a so called CAN bus. To this bus 20 there are connected a number of processors 22, 24 and 26, which are arranged for measuring different types of properties of the vehicle, like for instance engine temperature, lambda sensor and other typical vehicle data like odometer data. To this bus 20 there is furthermore connected a message handling device 28, indicated by a dashed box, which handles some of the functionality according to the present invention. The message handling device 28 includes a control unit 30 that interfaces with the bus 20. To the control unit 30 there is also connected a positioning unit 32, which here is in the form of a GPS receiver, a radio communication unit 36 for communication with the network, a local storage 34 as well as a user input unit 38 for receiving inputs from a user, normally the operator of the vehicle. The user input unit 38 is preferably provided in the form of a keyboard or a keypad, but also other types of input are feasible, like for instance the use of voice inputs and voice recognition. There can also be provided a display so that the operator of the vehicle can be informed of selectable actions, received information etc. It should also be realised that the user input unit 38 can be provided in a separate handheld device like for instance in a hand held computer like a personal digital assistant. The processors 22, 24, 26, the positioning unit 32 and the user input unit 38 all allow the provision of data of one or more types to the control unit and are therefore also termed data providing units.

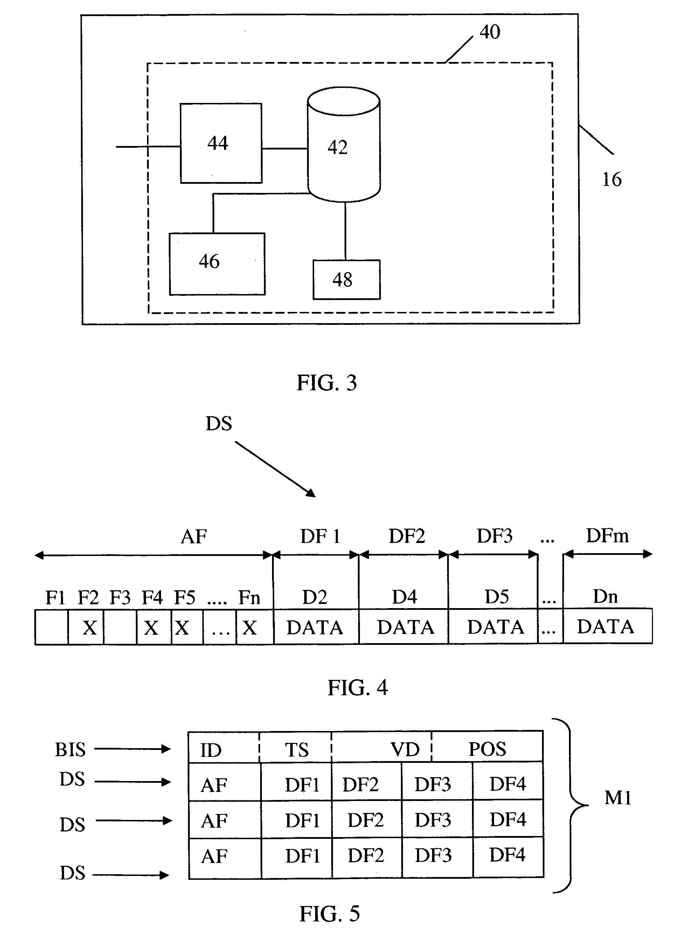

Fig. 3 schematically shows a block schematic of the vehicle support centre 16. The vehicle support centre 16 includes a message handling device 40, indicated by a dashed box, including a communication unit 44 for communication with the network. The communication unit 44 may or may not be a radio communication unit depending on how the interface to the wireless network is realised. Since the centre 16 is stationary it is however not necessary that this part of the connection to the network is wireless. The communication unit 44 is connected to a control unit in the form of a server 42, which is in turn connected to a storage 48 and to an input unit 46. The input unit 46 can be provided in the form of a web page, which a shipping firm may access in order to enter and receive data. It can also or additionally include a keyboard or similar input means. The input unit 46 allows the provision of data of one or more types to the server 42 and is therefore also termed data providing unit.

As mentioned earlier there are numerous situations when communication is needed between the vehicle and the vehicle support centre. However such communication is often expensive in nature, why there is a need to limit the data transmitted to a minimum. The present invention aims to lower the communication considerably, which lowers the cost and also allows a more efficient data transmission. Therefore a number of scenarios will be described in relation to when data needs to be transferred between a vehicle and a vehicle support centre.

In doing this the messages sent between a vehicle and a vehicle support centre are based on data segments having a certain structure. One such segment DS according to the present invention is outlined in fig. 4. Here a first field of the segment is denoted an allocation field AF which includes a number of allocation indicators F1- Fn that can be set. The allocation indicators are provided in a certain pre-defined order known by both the server and the vehicle control unit and specify what types of data is to be placed in a number of data fields DF that follow the allocation field AF. An allocation indicator is here provided in the form of a flag, the setting of which indicates that an associated type of information content is to be sent in the data segment. Thus for instance a digital value of "one" might indicate a setting, where a digital value of "zero" would indicate no setting or vice versa. The setting also indicates in what order data of different types is provided in the following data fields. As shown in fig. 4, a second, fourth, fifth and n-th flag F2, F4, F5, Fn have been set, which is indicated by crosses. The second flag F2 directly indicates that a first following data field DF1 is to be used for data of a type D2, the fourth flag F4 indicates that a second following data field DF2 is to be used for data of a type D4, the fifth flag F5 indicates that a third following data field DF3 is to be used for data of a type D5 and the n-th flag Fn indicates that an m-th following data field DFm is to be used for data of a type Dn. The value n here indicates the number of flags that can be set in the allocation field AF as well as the number of types of data corresponding to the flags, while the value m, which is variable, indicates the number of data fields DF that are provided for the set flags. Thus the order in which the flags are set directly indicate the order of the types of data in the data fields DF. In the example of fig. 4, there is furthermore provided a one to one relationship between set flag and corresponding allocated data field. The invention is however not limited to this. It should for instance be realised that it is possible that one of the flags can be used for allocating data fields to more than one type of data. Each flag can furthermore allocate more than one data field to one type of data. The order in which these would be allocated could also be varied. It is for instance possible that all data fields allocated to a first data type are grouped together, followed by the data fields of the following data types also grouped together. Alternatively the allocated first data fields of the data types can be provided together, followed by the allocated second data fields of the data types provided together etc. What is important though is that a set flag directly indicates to what data type a data field is allocated.

One first communication scenario will now be described, which is a driver log scenario. There are many rules and regulations related to the commercial use of vehicles, like for instance shipping of goods using trucks. One such rule is that a driver log is kept, which keeps track of how long and far a driver drives a truck, when he takes breaks etc. What has normally been done previously is that the driver keeps his driver log in the vehicle and submits it to the shipping office when he is finished.

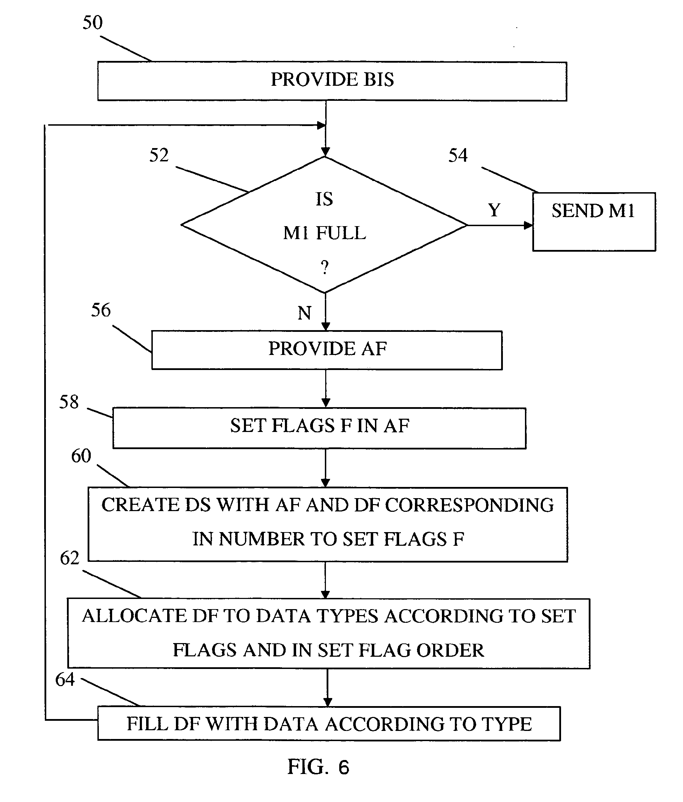

A method according to the present invention performed in relation to a driver log will now be described with reference being made to the previously described fig. 1 - 4 as well as to fig. 5 and 6, where fig. 5 outlines the structure of a first message M1 and fig. 6 shows a flow chart of the method according to a first embodiment of the present invention provided for this first communication scenario.

In the example given here the different types of data can be activity identity, time, activity data, vehicle data and position data, The method may here start with a driver log being set up in the vehicle support centre 16. The server 42 can then send a message to the message handling device 28 of the vehicle 10 via the communication unit 44 and the network 14 and indicating that a log has been started and entries are to be made. It may also start with the operator of the vehicle 10 logging on to the message handling device 28. In both cases, the control unit 30 of the message handling device 28 in the vehicle 10 generates the payload for a first message M1. It first provides some initial information to be included in the message, step 50. This initial information is here a basic information segment BIS including a message identity ID, a time stamp TS, some vehicle data VD, like odometer information as well as the position POS of the vehicle, which is fetched from the positioning unit 32. The vehicle data is fetched from one of the processors, for instance processor 22 on the CAN bus 20. The basic information segment BIS may also include status entry coding, i.e. information indicating a coding for a status entry, which may be made by the operator of the vehicle. This basic information may be fetched at the moment the driver starts the vehicle. This field BIS is outlined in the upper part of fig. 5.

In the present embodiment driver log data is sent from the vehicle in the payload of SMS messages. In order to not unnecessarily send data, the control unit 30 keeps track of the size of the payload of message M1 and checks if it is full or not, step 52, and if it is the first message M1 is sent, step 54. If however it is not, the control unit 30 awaits input from the user via the user input unit 38. If for instance the driver stops the vehicle, he is presented with a menu of possible activities to select from, where one might be fuelling. Once he selects one activity the control unit provides an allocation field AF associated with that activity, step 56, and sets flags F of the allocation field AF in relation to that activity, step 58. Thus the allocation field AF and the flags in it are set in dependence of the user inputs and more specifically in dependence of the user selecting an activity. The control unit 30 then creates a data segment DS by appending data fields DF in a number that is decided by the number of set flags, step 60, allocates these data fields to different types of data according to the flags and in the set flag order, step 62, and fills the data fields with the different types of data, step 64. Once this has been done the control unit 30 goes back and checks if the message M1 is full or not, step 52. It can thereafter continue to add data segments DS until the message is full or nearly full, whereupon the message M1 is sent, step 54.

In this way it is possible to add segments to the message M1 for activities the driver performs. It is for instance possible that the driver stops for filling the tank of the vehicle. He might then select the activity fuelling. A data segment DS may then be created where an activity identity flag, vehicle data flag and position data flag are set. The control unit 30 then fills an activity identity into an allocated data field, fetches vehicle data from the CAN bus, like for instance an odometer value, and fills it into an allocated data field and fetches the position value from the positioning unit 32 and fills it into an allocated field. The operator may then for a following segment DS be allowed to enter how much fuel that was filled into the vehicle. For this activity an activity flag, position flag, vehicle data flag and comment data flag might be set and data filled into the different data fields in the above described manner. In this way it is possible to create a segment for each activity performed and then send the message M1 when it is full.

When the message M1 is to be sent, the control unit 30 provides the created payload comprising the different segments to the radio communication unit 36 and orders it to send this payload in the message M1. The radio communication unit 36 then forms an SMS message M1 and sends it to the vehicle support centre 16, where it is received by the communication unit 44 and forwarded to the server 42. The server 42 goes on and stores it in a driver log in storage 48. In this way the driver can generate messages and fill them with data. These messages are then recurrently transmitted for the duration of the drive activity. Once the trip is finished, the driver will of course send a message that might not be full having a unique message identity. This message might furthermore be sent upon request from the server 42 of the vehicle support centre 16. The driver log might then be accessed on the server 42 by the shipping firm.

Sent and unsent messages are also stored in the storage 34 of the message handling device 28 in the vehicle 10. Because the sent messages are provided with message identities ID it is possible for the server 42 of the vehicle support centre 16 to identify if any message is missing, i.e. has not been received, through simply checking the received message identities and ask for a resending of such missing messages. This is very easy to do if the message identities are provided in the form of a consecutive number series. When the control unit 30 of the message handling device 28 in the vehicle 10 receives such a request it fetches the missing message and resends it.

Typically at least some data in the data fields is provided as delta values of or deviations from the absolute values provided in the basic information segment BIS. This is especially the case for position data and vehicle data like odometer data. By doing this it is possible to have the size of the data fields further reduced. As an alternative to providing this information in the basic information segment BIS, it is also possible to provide an absolute value the first time this type of data is provided in a data field of a data segment and provide the values for this type of data in later segments of the message as delta values.

It is also possible for the support server to send a question to the vehicle. This is done by sending a segment having the flags set in a special fashion. When this is done data of different types are fetched in dependence of the set flags and retransmitted in a response message having an identical flag setting.

There exists a further feature of the present invention and that is that the message handling unit 28 in the vehicle 10 keeps track of which network 14 the communication unit 36 is currently communicating with. This is done through the radio communication unit 36 identifying the identity of the network and forwarding this identity to the control unit 30. The control unit 30 then compares the network identity with a network preference setting. If there is a match the message is sent, but if there is no match it is possible to delay sending of the message. It can then delay sending a full message until the radio communication unit 36 is connected to a preferred network, which might be its home network. This is beneficial in further reducing the traffic costs.

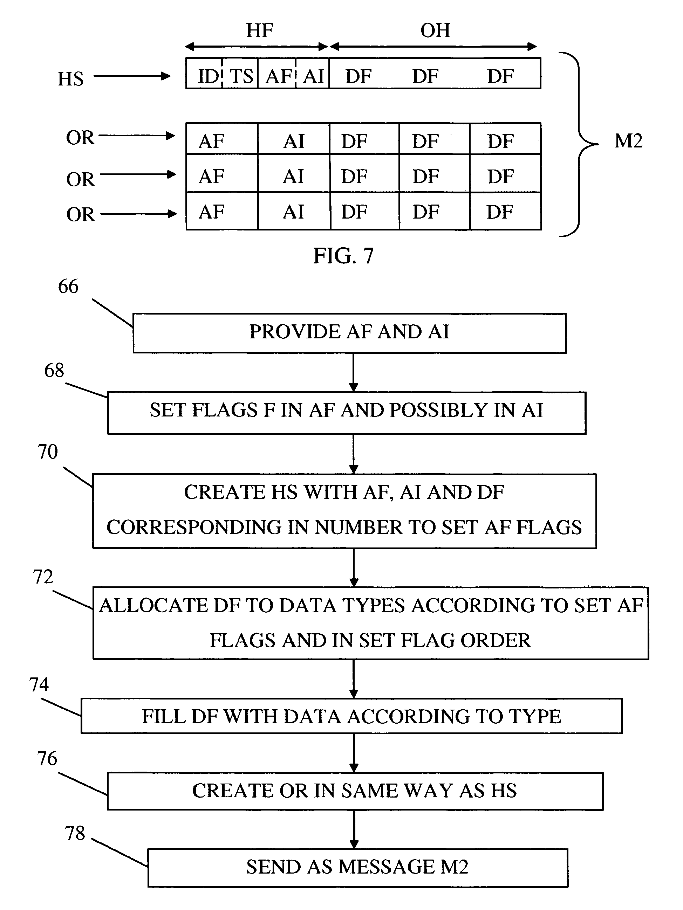

As mentioned earlier it is possible to also use the present invention in other circumstances than with a driver log. It can for instance be used in association with transport orders. Now a second communication scenario related to transport orders will be described. In this case the server sends a transport order to the vehicle. One such transport order or second message M2 is schematically outlined in fig. 7. The message M2 is here also provided in the form of data segments, where a first is denoted header segment HS and comprises a header field HF, including an identity number ID, a time stamp TS an allocation field AF and an access indicator field AI. The allocation field AF is provided in the same fashion as the allocation field mentioned earlier in relation to the first scenario. The access indicator field AI is a field comprising access indicators indicating, for the fields set by an allocation indicator, whether editing is allowed of the data in a corresponding data field. The access indicator field AI is thus associated with the allocation field AF and access indicators may here only be set if the corresponding allocation indicator has been set. This header field HF is then followed by a number of data fields DF. The group of data fields are jointly denoted an order header OH and are allocated in the same way as the data fields were allocated in the first scenario. Here there might be several data fields allocated to the same data type, though. The order header OH includes different types of data such as the address the transport is made to, the address it is made from, contact persons etc.

The message M2 also includes a number of further data segments, here also denoted order rows OR. The order rows OR are made up in the same way as the data segments in the first scenario with the addition of access indicator fields to the allocation fields. The order rows OR describes the content of an order, like an order from company A to company B, number of packages in the shipment etc.

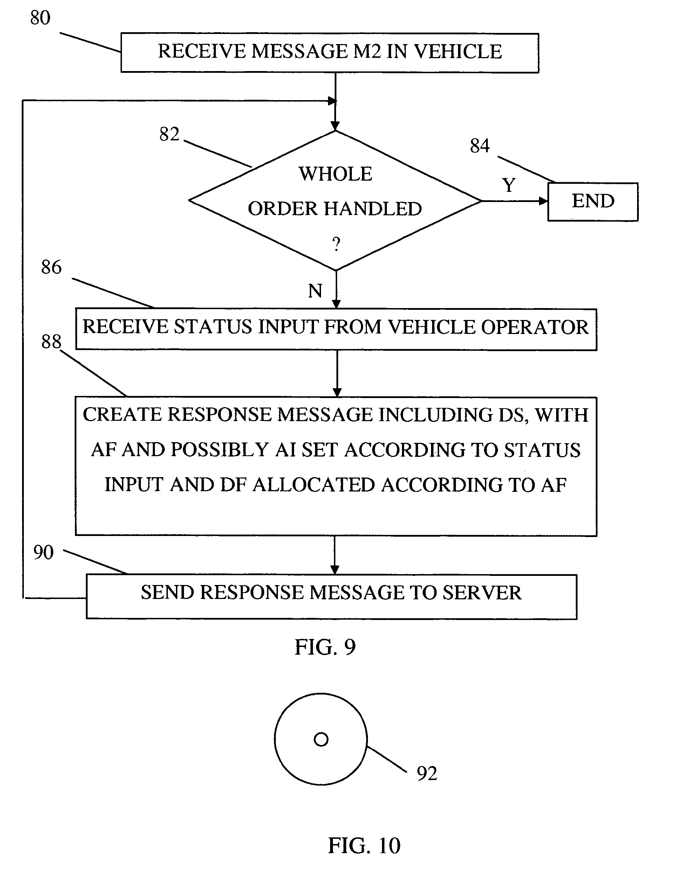

A method according to a second embodiment of the present invention as applied in this second scenario will now be described with reference being made to fig. 1 -3, 7 as well as to fig. 8, which shows a flow chart of a part of this method being performed in the server of the vehicle support centre and to fig. 9, which shows a flow chart of a part of the method performed in the vehicle.

First the shipping firm enters data relating to the order into the server 42 of the vehicle support centre 28. This can be done by accessing a web page associated with the server 42 via input unit 38 and there entering all relevant information regarding the order, like destinations etc. Once this has been done, the server 42 provides the allocation field AF and access indication field AI, step 66. It then sets flags F in allocation field and in the access indicator field AI in case editing is to be allowed, step 68. The server 42 thereafter creates the header segment HS with the header field HF including order identity ID, time stamp TS and the allocation field AF and access indication field AI followed by a number of data fields DF in the order header OH, where the number is depending on the number of flags set in the allocation field, step 70. The server 42 thereafter allocates the data fields to different types of data according to the set allocation flags and in an order defined by the order in which the set allocation flags appear, step 72. The data fields of the header segment HS are then filled with data according to type, step 74. The server 42 thereafter creates order rows OR according to the same principle in which a header segment HS was created, step 76. Typically there is an order row OR provided for every shipment made from one destination to another. Once all the order rows OR have been inserted, the server 42 orders the communication unit 44 to send these together with the header segment HS in the payload of a second message M2 to the vehicle 10, step 78. The message can here be split into more than one SMS message.

Thereafter the message M2 is received by the radio communication unit 36 of the message handing device 28 in the vehicle 10, step 80, from where it is forwarded to the control unit 30. The control unit 30 then investigates if the whole order has been handled or not, step 82, and if it has the method is ended, step 84. If however it has not, the control unit 30 awaits status information from the operator of the vehicle via the user input unit 38 and when it does receive such information, step 86, like for instance when an order has been accepted, the load is being loaded into the vehicle, the load is being unloaded etc., a response message is created, step 88. The payload of the response message is created based on the type of activity selected by the operator and then includes a data segment DS where allocation flags F and possibly also access indicator flags have been set according to the status of the order selected by the user. This payload is forwarded to the radio communication unit 36, which puts the payload in a response message. The response message is then sent to the server 42, step 90. This is done in the same way as above with data segments having allocated data fields. The difference here is that a message is sent each time an activity has been finished. In this way it is possible to always know if a part of an order has been handled and when.

It is furthermore possible that the data structure can be used also for sending reports of the status of the vehicle, like for instance if something is malfunctioning or close to malfunctioning,. In this case it is possible for the server to send one or more data segments with allocation fields settings as above and responses being sent with the same allocation field settings. In this way it is possible for the server of the vehicle support centre to query the vehicle of how it functions. The message handling unit of the vehicle can then automatically collect the data requested. It is also possible that the message handling device in the vehicle reacts on some part of the vehicle reporting a fault or the imminent danger of a fault and then send one or more data segments by its own initiative. It is also possible to use the same functionality to download for instance software patches replacing faulty software, using the data segments according to the present invention.

The present invention provides several advantages, where a first advantage is that the amount of data transmitted is reduced. It also allows a dynamic and flexible structure for sending of data in that it allows allocation of fields to types of data based on need. Data fields are thus not reserved for a type of data not needed. The use of allocation fields provides for a simple indication of type of data. It is possible to provide this with only a minimum amount of extra information. The flags can be provided as just one character, which is to be compared with the maximum number of characters allowed in an SMS message of 160.

The radio communication unit in the vehicle is preferably provided as a radio communication module, having the communication abilities of a cellular phone. Also the communication unit of the vehicle support centre can be provided in this way. The storages are preferably provided in the form of standard memories.

The control unit in the vehicle and the server are each preferably provided in the form of a processor with program memories comprising computer program code which performs the method according to the invention. The program code can also be provided in the form of a computer program product, which may be in the form of a portable memory device, like a CD ROM disc. One such disc 92 is schematically shown in fig. 10. It may also be provided in the form of pure computer program code, which may be provided on a server and downloaded from there to a vehicle or the server of the vehicle support centre.

The network is normally a GSM-type of network or a GPRS network. It is of course also possible that the network is a UMTS network. The message need furthermore not be SMS messages but can be provided using messages having variable lengths like using normal UDP messaging. However, it should be realized that these types of networks and messages are mere examples of suitable network and message types. Consequently the present invention can be used in any wireless network and use any message structure supported by such a network. Data can also be sent more frequently than what is described in the first scenario and can then be sent in relation to each activity. It can also be sent after a predetermined number of data segments have been created or after a predetermined time has elapsed. It should therefore also be realised that an SMS message does not have to be full before being sent in the first embodiment. The basic information segment need also not be provided in the first embodiment. It should furthermore be realised that delta values might be used in all described embodiments. However, the present invention is in no way limited to the use of these delta values or deviations from an absolute value, but absolute values can be used throughout a message. The additional features of the first embodiment may, i.e. resending of messages and cancelling sending depending on network identity may just as well be omitted from the first embodiment as well as be provided in the other mentioned variations of the present invention either singly or combined. Therefore the present invention is only to be limited by the following claims.

## Claims

1. Method of transmitting vehicle related data between a vehicle (10) and a vehicle support centre (16) via a wireless network (14), comprising the steps of:
providing an allocation field (AF) including settable allocation indicators (F1, F2, F3, F4, F5,.., Fn), each corresponding to a different type of data to be transmitted between the vehicle and the vehicle support centre, (step 56; 66),
setting at least one allocation indicator (F2, F4, F5, Fn) in said allocation field for a corresponding type of data (D2, D4, D5, Dn), (step 58; 68),
creating a data segment (DS, HR, OR) comprising at least said allocation field and a number of data fields (DF1, DF2, DF3, .., DFm), where the number is based on said allocation indicator setting, (step 60; 70),
allocating each data field to a type of data (D2, D4, D5, Dn) in accordance with said allocation indicator setting, (step 62; 72),
filling each data field with data of the allocated type, (step 64; 74), and
transmitting a data message (M1; M2) between the vehicle and vehicle support centre at least comprising said segment, (step 54; 78).

2. Method according to claim 1, wherein the allocation indicators of the allocation field are provided in a certain order, the step of setting comprises setting more than one allocation indicator and the step of allocating comprises allocating each data field to a type of data in an order that corresponds to the order in which the set allocation indicators follow each other.

3. Method according to claim 1 or 2, further comprising the step of receiving a data message having a segment with an allocation field comprising at least one allocation indicator that has been set and the step of setting comprises setting allocation indicators of the allocation field for the message to be sent that correspond to the allocation field setting of the received message.

4. Method according to any previous claim, further comprising the steps of providing an access identification field (AI) associated with said allocation field, which has one access indicator for each allocation indicator, and setting at least one access indicator, where only those access indicators can be set that correspond to allocation indicators that have been set, wherein said created data segment includes also said access identification field.

5. Method according to any previous claim, wherein a segment (BIS) where data of a certain type is first provided comprises this data in the form of an absolute value and data of the same type in data fields in later segments is provided as deviations from said absolute value.

6. Method according to any previous claim, wherein the message comprises a message identity (ID) and further comprising the steps of storing the transmitted data message, receiving a request for retransmitting the data message based on the message identity and retransmitting said data message.

7. Method according to any previous claim further comprising the steps of identifying an identity of said wireless network, comparing the identity with a network preference setting and determining whether the message is to be transmitted or not in dependence of the comparison.

8. Method according to any previous claim, wherein several data segments are created and said message has a fixed size, wherein the step of sending comprises sending a message when there are enough segments to essentially fill said message.

9. Method according to any previous claim further comprising the step of generating a driver log in the vehicle support centre, wherein the steps of providing, setting, creating, filling and transmitting are recurrently performed in the vehicle in order to fill said driver log with data.

10. Message handling device (28; 40) for providing transmission of vehicle related data between a vehicle (10) and a vehicle support centre (16) via a wireless network (14) comprising:
a communication unit (36; 44) for communication using the wireless network, and
a control unit (30; 42) arranged to
provide an allocation field (AF) including settable allocation indicators (F1, F2, F3, F4, F5,.., Fn), each corresponding to a type of data to be transmitted between the vehicle and the vehicle support centre,
set at least one allocation indicator (F2, F4, F5, Fn) in said allocation field for a corresponding type of data (D2, D4, D5, Dn),
create a data segment (DS; HS, OR) comprising at least said allocation field and a number of data fields (DF1, DF2, DF3, .., DFm), where the number is based on said allocation indicator setting,
allocate each data field to a type of data (D2, D4, D5, Dn) in accordance with said allocation indicator setting,
fill each data field with data of the allocated type, and
order said communication unit to transmit a data message (M1; M2) between the vehicle and the vehicle support centre at least comprising said segment.

11. Message handling device according to claim 10, wherein the allocation indicators of the allocation field are provided in a certain order and the control unit (30; 42) is further arranged to set more than one allocation indicator and allocate each data field to a type of data in an order that corresponds to the order in which the set allocation indicators follow each other.

12. Message handling device according to claim 10 or 11, wherein the communication unit (36; 44) is arranged to receive a data message having a segment with an allocation field comprising at least one allocation indicator that has been set and the control unit (30; 42) is further arranged to set allocation indicators of the allocation field for the message to be sent that correspond to the allocation field setting of the received message.

13. Message handling device according to any of claims 10 - 12, wherein the control unit (42) is arranged to provide an access identification field (AI) associated with said allocation field, which has one access indicator for each allocation indicator, and set at least one access indicator, where only those access indicators can be set that correspond to allocation indicators that have been set, wherein said created data segment includes also said access identification field.

14. Message handling device according to any of claims 10 - 13, wherein a segment where data of a certain type is first provided comprises this data in the form of an absolute value and data of the same type in data fields in later segments is provided as deviations from said absolute value.

15. Message handling device (28) according to any of claims 10 - 14, wherein said message (M1) comprises a message identity (ID) and the control unit (30) is further arranged to store the transmitted data message in a data storage (34), receive a request for retransmitting the data message based on the message identity and order retransmission of said data message.

16. Vehicle (10) for exchanging vehicle related data with a vehicle support centre (16) via a wireless network (14) and comprising a message handling device (28) according to any of claims 10 - 15, wherein the communication unit (36) is a radio communication unit.

17. Vehicle according to claim 16, wherein the control unit (30) is arranged to identify an identity of said wireless network, compare the identity with a network preference setting and determine whether the message is to be transmitted or not in dependence of the comparison.

18. Vehicle support centre (16) for exchanging vehicle related data with a vehicle (10) via a wireless network (14) and comprising a message handling device (40) according to any of claims 10 - 15.

19. Computer program product (92) for enabling transmission of vehicle related data between a vehicle (10) and a vehicle support centre (16) via a wireless network (14) and comprising computer program code to make a computer perform, when said computer program code is loaded therein:
provide an allocation field (AF) including settable allocation indicators (F1, F2, F3, F4, F5,.., Fn), each corresponding to a different type of data to be transmitted between the vehicle and the vehicle support centre,
set at least one allocation indicator (F2, F4, F5, Fn) in said allocation field for a corresponding type of data (D2, D4, D5, Dn),
create a data segment (DS; HS, OR) comprising at least said allocation field and a number of data fields (DF1, DF2, DF3, .., DFm), where the number is based on said allocation indicator setting,
allocate each data field to a type of data (D2, D4, D5, Dn) in accordance with said allocation indicator setting,
fill each data field with data of the allocated type, and
at least order transmission of a data message (M 1; M2) between the vehicle and the vehicle support centre at least comprising said segment.

20. Signal (M1; M2) transmitting vehicle related data between a vehicle (10) and a vehicle support centre (16) via a wireless network (14), said signal comprising:
at least one data segment (DS; HS, OR) including
an allocation field (AF) having settable allocation indicators (F1, F2, F3, F4, F5,.., Fn) corresponding to different types of data that can be transmitted between the vehicle and the vehicle support centre, where at least one allocation indicator (F2, F4, F5, Fn) in said allocation field has been set for a corresponding type of data (D2, D4, D5, Dn), and
a number of data fields (DF1, DF2, DF3, .., DFm), where the number is based on said allocation indicator setting and each data field has been allocated to and filled with data of a type (D2, D4, D5, Dn) in accordance with said allocation indicator setting.

## Patentansprüche

1. Verfahren zum Übertragen von fahrzeugbezogenen Daten zwischen einem Fahrzeug (10) und einem Fahrzeug-Supportzentrum (16) über ein Drahtlosnetzwerk (14), mit den Schritten:
Bereitstellen eines Allokationsfeldes (AF), das einstellbare Allokationsindikatoren (F1, F2, F3, F4, F5, ..., Fn) aufweist, wobei jeder der Allokationsindikatoren einem eigenen Datentyp entspricht, der zwischen dem Fahrzeug und dem Fahrzeug-Supportzentrum übertragen werden soll, (Schritt 56; 66),
Einstellen wenigstens eines Allokationsindikators (F2, F4, F5, Fn) in dem Allokationsfeld für einen entsprechenden Datentyp (D2, D4, D5, Dn), (Schritt 58; 68),
Erzeugen eines Datensegments (DS, HR, OR), das wenigstens das Allokationsfeld und eine Anzahl an Datenfeldern (DF1, DF2, DF3, ..., DFm) aufweist, wobei die Anzahl auf der Allokationsindikatoreinstellung beruht, (Schritt 60; 70),
Allokieren eines jeden Datenfelds für einen Datentyp (D2, D4, D5, Dn) in Übereinstimmung mit der Allokationsindikatoreinstellung, (Schritt 62; 72),
Füllen eines jeden Datenfelds mit Daten des allokierten Typs, (Schritt 64; 74), und
Übertragen einer Datennachricht (M1; M2) zwischen dem Fahrzeug und dem Fahrzeug-Supportzentrum, die wenigstens das Segment aufweist, (Schritt 54; 78).

2. Verfahren nach Anspruch 1, wobei die Allokationsindikatoren des Allokationsfelds in einer bestimmten Reihenfolge bereitgestellt werden, und wobei der Schritt des Einstellens das Einstellen von mehr als einem Allokationsindikator aufweist, und der Schritt des Allokierens das Allokieren von jedem Datenfeld für einen Datentyp entsprechend einer Reihenfolge aufweist, die der Reihenfolge entspricht, gemäß der die eingestellten Allokationsindikatoren aufeinander folgen.

3. Verfahren nach Anspruch 1 oder 2, weiterhin aufweisend den Schritt des Empfangens einer Datennachricht, die ein Segment mit einem Allokationsfeld aufweist, das wenigstens einen Allokationsindikator aufweist, der eingestellt wurde, und wobei der Schritt des Einstellens das Einstellen von Allokationsindikatoren des Allokationsfelds für die zu sendende Nachricht aufweist, die der Allokationsfeldeinstellung der erhaltenen Nachricht entsprechen.

4. Verfahren nach einem der vorangehenden Ansprüche, weiterhin aufweisend die Schritte des Bereitstellens eines Zugangsidentifikationsfelds (AI), das mit dem Allokationsfeld verknüpft ist, und das einen Zugangsindikator für jeden Allokationsindikator aufweist, und des Einstellens wenigstens eines Zugangsindikators, wobei lediglich die Zugangsindikatoren einstellbar sind, die Allokationsindikatoren entsprechen, die eingestellt wurden, wobei das erzeugte Datensegment auch das Zugangsidentifikationsfeld beinhaltet.

5. Verfahren nach einem der vorangehenden Ansprüche, wobei ein Segment (BIS), wo Daten eines bestimmten Typs zuerst bereitgestellt werden, diese Daten in Form eines Absolutwerts aufweist, und Daten desselben Typs in Datenfeldern in späteren Segmenten als Abweichungen von dem Absolutwert bereitgestellt werden.

6. Verfahren nach einem der vorangehenden Ansprüche, wobei die Nachricht eine Nachrichtidentifikation (ID) aufweist, und das Verfahren weiterhin die Schritte beinhaltet des Speicherns der übertragenen Datennachricht, des Empfangens eines Antrags zum Rückübertragen der Datennachricht basierend auf der Nachrichtidentität, und des Rückübertragens der Datennachricht.

7. Verfahren gemäß einem der voranstehenden Ansprüche, weiterhin aufweisend die Schritte des Identifizierens einer Identität des Drahtlosnetzwerks, des Vergleichens der Identität mit einer Netzwerkvorzugseinstellung, und des Bestimmens, ob die Nachricht übertragen werden soll oder nicht in Abhängigkeit des Vergleichs.

8. Verfahren nach einem der vorangehenden Ansprüche, wobei mehrere Datensegmente erzeugt werden, und die Nachricht eine feste Größe aufweist, wobei der Schritt des Sendens das Senden einer Nachricht aufweist, wenn es genug Segmente gibt, um die Nachricht im Wesentlichen zu füllen.

9. Verfahren gemäß einem der vorangehenden Ansprüche, weiterhin aufweisend den Schritt des Erzeugens eines Fahrtenbuchs in dem Fahrzeug-Supportzentrum, wobei die Schritte des Bereitstellens, Einstellens, Erzeugens, Füllens und Übertragens wiederholt im Fahrzeug ausgeführt werden, um das Fahrtenbuch mit Daten zu füllen.

10. Nachrichtenverwaltungsvorrichtung (28; 40) für die Übertragung von fahrzeugbezogenen Daten zwischen einem Fahrzeug (10) und einem Fahrzeug-Supportzentrum (16) mittels eines Drahtlosnetzwerks (14), mit:
einer Kommunikationseinheit (36; 44) zum Kommunizieren unter Verwendung des Drahtlosnetzwerks, und
einer Steuereinheit (30; 42), die dazu eingerichtet ist:
ein Allokationsfeld (AF) bereitzustellen, das einstellbare Allokationsindikatoren (F1, F2, F3, F4, F5, ..., Fn) aufweist, wobei jeder der Allokationsindikatoren einem Datentyp entspricht, der zwischen dem Fahrzeug und dem Fahrzeugsupportzentrum übertragen werden soll,
wenigstens einen Allokationsindikator (F2, F4, F5, Fn) in dem Allokationsfeld für einen bestimmten Datentyp (D2, D4, D5, Dn) einzustellen, ein Datensegment (DS; HS, OR) zu erzeugen, das zumindest das Allokationsfeld und eine Anzahl von Datenfeldern (DF1, DF2, DF3, ..., DFm) aufweist, wobei die Anzahl auf der Allokationsindikatoreinstellung basiert,
jedes Datenfeld für einen bestimmten Datentyp (D2, D4, D5, Dn) zu allokieren in Übereinstimmung mit der Allokationsindikatoreinstellung, jedes Datenfeld mit Daten des allokierten Typs aufzufüllen, und
der Kommunikationseinheit anzuordnen, eine Datennachricht (M1; M2) zwischen dem Fahrzeug und dem Fahrzeugsupportzentrum zu übertragen, die wenigstens das Segment aufweist.

11. Nachrichtenverwaltungsvorrichtung gemäß Anspruch 10, wobei die Allokationsindikatoren des Allokationsfelds in einer bestimmten Reihenfolge bereitgestellt werden, und die Steuereinheit (30; 42) weiterhin dazu eingerichtet ist, mehr als einen Allokationsindikator einzustellen, und jedes Datenfeld für einen Datentyp zu allokieren, in einer Reihenfolge, die der Reihenfolge entspricht, in der die eingestellten Allokationsindikatoren aufeinander folgen.

12. Nachrichtenverwaltungsvorrichtung gemäß Anspruch 10 oder 11, wobei die Kommunikationseinheit (36; 44) dazu eingerichtet ist, eine Datennachricht zu erhalten, die ein Segment aufweist, das ein Allokationsfeld beinhaltet, das wenigstens einen Allokationsindikator aufweist, der eingestellt wurde, und die Steuereinheit (30; 42) weiterhin dazu eingerichtet ist, Allokationsindikatoren des Allokationsfelds für die zu versendende Nachricht einzustellen, die der Allokationsfeldeinstellung der erhaltenen Nachricht entsprechen.

13. Nachrichtenverwaltungsvorrichtung gemäß einem der Ansprüche 10 bis 12, wobei die Steuereinheit (42) dazu eingerichtet ist, ein Zugangsidentifikationsfeld (AI) bereitzustellen, das mit dem Allokationsfeld verknüpft ist, das einen Zugangsindikator für jeden Allokationsindikator aufweist, und wenigstens einen Zugangsindikator einzustellen, wobei lediglich die Zugangsindikatoren eingestellt werden können, die Allokationsindikatoren entsprechen, die eingestellt wurden, wobei das erzeugte Datensegment auch das Zugangsidentifikationsfeld beinhaltet.

14. Nachrichtenverwaltungssystem gemäß einem der Ansprüche 10 bis 13, wobei ein Segment, bei dem Daten eines bestimmten Typs zuerst bereitgestellt wurden, diese Daten in Form eines Absolutwerts aufweist, und Daten desselben Typs in Datenfeldern in späteren Segmenten als Abweichungen von dem Absolutwert bereitgestellt werden.

15. Nachrichtenverwaltungsvorrichtung (28) gemäß einem der Ansprüche 10 bis 14, wobei die Nachricht (M1) eine Nachrichtenidentität (ID) aufweist, und die Steuereinrichtung (30) weiterhin dazu eingerichtet ist, die übertragene Datennachricht in einen Datenspeicher (34) zu speichern, einen Antrag zum erneuten Übertragen der Datennachricht zu erhalten, basierend auf der Nachrichtenidentität, und das Neuübertragen der Datennachricht anzuordnen.

16. Fahrzeug (10), das dazu eingerichtet ist, fahrzeugbezogene Daten mit einem Fahrzeug-Supportzentrum (16) über ein Drahtlosnetzwerk (14) auszutauschen, und das eine Nachrichtenverwaltungsvorrichtung (28) gemäß einem der Ansprüche 10 bis 15 aufweist, wobei die Kommunikationseinheit (36) eine Radiofunkkommunikationseinheit ist.

17. Verfahren nach Anspruch 16, wobei die Steuereinheit (30) dazu eingerichtet ist, eine Identität des Drahtlosnetzwerks zu identifizieren, die Identität mit einer Netzwerkvorzugseinstellung zu vergleichen, und festzustellen, ob die Nachricht zu übertragen ist oder nicht in Abhängigkeit des Vergleichs.

18. Fahrzeugsupportzentrum (16), das dazu eingerichtet ist, fahrzeugbezogene Daten mit einem Fahrzeug (10) über ein Drahtlosnetzwerk (14) auszutauschen, und das eine Nachrichtenverwaltungsvorrichtung (40) gemäß einem der Ansprüche 10 bis 15 aufweist.

19. Computerprogrammprodukt (92), welches die Übertragung von fahrzeugbezogenen Daten zwischen einem Fahrzeug (10) und einem Fahrzeug-Supportzentrum (16) mittels eines Drahtlosnetzwerks (14) ermöglicht, und das Computerprogrammcode aufweist, die einen Computer dazu veranlassen, die folgenden Schritte auszuführen, wenn der Computerprogrammcode in den Computer geladen wird:
Bereitstellen eines Allokationsfelds (AF) mit einstellbaren Allokationsindikatoren (F1, F2, F3, F4, F5, ..., Fn), wobei jeder der Allokationsindikatoren einem eigenen Datentyp entspricht, der zwischen dem Fahrzeug und dem Fahrzeug-Supportzentrum übertragen werden soll,
Einstellen von wenigstens einem Allokationsindikator (F2, F4, F5, Fn) in dem Allokationsfeld für einen bestimmten Datentyp (D2, D4, D5, Dn),
Erzeugen eines Datensegments (DS; HS, OR), das wenigstens das Allokationsfeld und eine Anzahl von Datenfeldern (DF1, DF2, DF3, ..., DFm) aufweist,
wobei die Anzahl auf der Allokationsindikatoreinstellung basiert,
Allokieren eines jeden Datenfelds für einen Datentyp (D2, D4, D5, Dn) in Übereinstimmung mit der Allokationsindikatoreinstellung,
Füllen eines jeden Datenfelds mit Daten des allokierten Typs, und
wenigstens Anordnen der Übertragung einer Datennachricht (M1; M2) zwischen dem Fahrzeug und dem Fahrzeug-supportzentrum, die wenigstens das Segment aufweist.

20. Signal (M1; M2) zum Übermitteln von fahrzeugbezogenen Daten zwischen einem Fahrzeug (10) und einem Fahrzeug-Supportzentrum (16) mittels eines Drahtlosnetzwerks (14), wobei das Signal wenigstens ein Datensegment (DS; HS, OR) aufweist, mit:
einem Allokationsfeld (AF), das einstellbare Allokationsindikatoren (F1, F2, F3, F4, F5, ..., Fn) aufweist, entsprechend unterschiedlichen Datentypen, die zwischen dem Fahrzeug und dem Fahrzeugsupportzentrum übertragen werden können, wobei wenigstens ein Allokationsindikator (F2, F4, F5, Fn) in dem Allokationsfeld für einen bestimmten Datentyp (D2, D4, D5, Dn) eingestellt wurde, und
einer Anzahl von Datenfeldern (DF1, DF2, DF3, ..., DFm), wobei die Anzahl basiert auf der Allokationsindikatoreinstellung, und wobei jedes Datenfeld allokiert wurde für und gefüllt wurde mit Daten eines Typs (D2, D4, D5, Dn) in Übereinstimmung mit der Allokationsindikatoreinstellung.

## Revendications

1. Procédé de transmission de données relatives à un véhicule entre un véhicule (10) et un centre d'assistance aux véhicules (16) via un réseau sans fil (14), comprenant les étapes suivantes :
prévision d'un champ d'allocation (AF) comprenant des indicateurs d'allocation paramétrables (F1, F2, F3, F4, F5, ..., Fn), correspondant chacun à un type différent de données à transmettre entre le véhicule et le centre d'assistance aux véhicules, (étape 56 ; 66),
paramétrage d'au moins un indicateur d'allocation (F2, F4, F5, Fn) dans ledit champ d'allocation pour un type de données correspondant (D2, D4, D5, Dn), (étape 58 ; 68),
création d'un segment de données (DS, HR, OR) comprenant au moins ledit champ d'allocation et un certain nombre de champs de données (DF1, DF2, DF3, ..., DFm), lequel nombre est basé sur ledit paramétrage des indicateurs d'allocation, (étape 60 ; 70),
allocation de chaque champ de données à un type de données (D2, D4, D5, Dn) en fonction dudit paramétrage des indicateurs d'allocation, (étape 62 ; 72),
remplissage de chaque champ de données avec des données du type alloué, (étape 64 ; 74), et
transmission d'un message de données (M1 ; M2) entre le véhicule et le centre d'assistance aux véhicules, comprenant au moins ledit segment, (étape 54 ; 78).

2. Procédé selon la revendication 1, dans lequel les indicateurs d'allocation du champ d'allocation sont prévus dans un certain ordre, l'étape de paramétrage comprend le paramétrage de plus d'un indicateur d'allocation et l'étape d'allocation comprend l'allocation de chaque champ de données à un type de données dans un ordre qui correspond à l'ordre dans lequel se suivent les indicateurs d'allocation paramétrés.

3. Procédé selon la revendication 1 ou 2, comprenant en outre l'étape de réception d'un message de données ayant un segment avec un champ d'allocation comprenant au moins un indicateur d'allocation qui a été paramétré et l'étape de paramétrage comprend le paramétrage des indicateurs d'allocation du champ d'allocation pour le message à envoyer qui correspondent au paramétrage du champ d'allocation du message reçu.

4. Procédé selon l'une quelconque des revendications précédentes, comprenant en outre les étapes de prévision d'un champ d'identification d'accès (AI) associé audit champ d'allocation, qui a un indicateur d'accès pour chaque indicateur d'allocation, et de paramétrage d'au moins un indicateur d'accès, où seuls peuvent être paramétrés les indicateurs d'accès qui correspondent aux indicateurs d'allocation qui ont été paramétrés, ledit segment de données créé comprenant également ledit champ d'identification d'accès.

5. Procédé selon l'une quelconque des revendications précédentes, dans lequel un segment (BIS) dans lequel des données d'un certain type sont prévues en premier comprend ces données sous la forme d'une valeur absolue et des données du même type dans des champs de données de segments ultérieurs sont prévues sous la forme d'écarts par rapport à ladite valeur absolue.

6. Procédé selon l'une quelconque des revendications précédentes, dans lequel le message comprend une identité de message (ID), et comprenant en outre les étapes de stockage du message de données transmis, de réception d'une demande de retransmission du message de données basée sur l'identité du message, et de retransmission dudit message de données.

7. Procédé selon l'une quelconque des revendications précédentes, comprenant en outre les étapes d'identification d'une identité dudit réseau sans fil, de comparaison de l'identité à un paramétrage de préférences réseau, et de détermination du fait que le message doit être transmis ou non en fonction de la comparaison.

8. Procédé selon l'une quelconque des revendications précédentes, dans lequel plusieurs segments de données sont créés et ledit message a une taille fixe, et l'étape d'envoi comprend l'envoi d'un message lorsqu'il y a suffisamment de segments pour remplir presque complètement ledit message.

9. Procédé selon l'une quelconque des revendications précédentes, comprenant en outre l'étape de génération d'un journal de conducteur au sein du centre d'assistance aux véhicules, les étapes de prévision, paramétrage, création, remplissage et transmission étant exécutées de façon récurrente dans le véhicule afin de remplir ledit journal de conducteur avec des données.

10. Appareil de messagerie (28 ; 40) permettant la transmission de données relatives à un véhicule entre un véhicule (10) et un centre d'assistance aux véhicules (16) via un réseau sans fil (14), comprenant :
une unité de communication (36 ; 44) permettant la communication au moyen du réseau sans fil, et
une unité de commande (30, 42) conçue pour :
prévoir un champ d'allocation (AF) comprenant des indicateurs d'allocation paramétrables (F1, F2, F3, F4, F5, ..., Fn), correspondant chacun à un type de données à transmettre entre le véhicule et le centre d'assistance aux véhicules,
paramétrer au moins un indicateur d'allocation (F2, F4, F5, Fn) dans ledit champ d'allocation pour un type de données correspondant (D2, D4, D5, Dn),
créer un segment de données (DS ; HR, OR) comprenant au moins ledit champ d'allocation et un certain nombre de champs de données (DF1, DF2, DF3, ..., DFm), lequel nombre est basé sur ledit paramétrage des indicateurs d'allocation,
allouer chaque champ de données à un type de données (D2, D4, D5, Dn) en fonction dudit paramétrage des indicateurs d'allocation,
remplir chaque champ de données avec des données du type alloué, et
commander à ladite unité de communication de transmettre un message de données (M 1 ; M2) entre le véhicule et le centre d'assistance aux véhicules, comprenant au moins ledit segment.

11. Appareil de messagerie selon la revendication 10, dans lequel les indicateurs d'allocation du champ d'allocation sont prévus dans un certain ordre, et l'unité de commande (30 ; 42) est en outre conçue pour paramétrer plus d'un indicateur d'allocation et allouer chaque champ de données à un type de données dans un ordre qui correspond à l'ordre dans lequel se suivent les indicateurs d'allocation paramétrés.

12. Appareil de messagerie selon la revendication 10 ou 11, dans lequel l'unité de communication (36 ; 44) est conçue pour recevoir un message de données ayant un segment avec un champ d'allocation comprenant au moins un indicateur d'allocation qui a été paramétré et l'unité de commande (30 ; 42) est en outre conçue pour paramétrer les indicateurs d'allocation du champ d'allocation pour le message à envoyer qui correspondent au paramétrage du champ d'allocation du message reçu.

13. Appareil de messagerie selon l'une quelconque des revendications 10 à 12, dans lequel l'unité de commande (42) est conçue pour prévoir un champ d'identification d'accès (AI) associé audit champ d'allocation, qui a un indicateur d'accès pour chaque indicateur d'allocation, et pour paramétrer au moins un indicateur d'accès, où seuls peuvent être paramétrés les indicateurs d'accès qui correspondent aux indicateurs d'allocation qui ont été paramétrés, ledit segment de données créé comprenant également ledit champ d'identification d'accès.

14. Appareil de messagerie selon l'une quelconque des revendications 10 à 13, dans lequel un segment dans lequel des données d'un certain type sont prévues en premier comprend ces données sous la forme d'une valeur absolue et des données du même type dans des champs de données de segments ultérieurs sont prévues sous la forme d'écarts par rapport à ladite valeur absolue.

15. Appareil de messagerie (28) selon l'une quelconque des revendications 10 à 14, dans lequel ledit message (M1) comprend une identité de message (ID), et l'unité de commande (30) est en outre conçue pour stocker le message de données transmis dans un stockage de données (34), recevoir une demande de retransmission du message de données basée sur l'identité du message, et ordonner la retransmission dudit message de données.

16. Véhicule (10) destiné à échanger des données relatives au véhicule avec un centre d'assistance aux véhicules (16) via un réseau sans fil (14) et comprenant un appareil de messagerie (28) selon l'une quelconque des revendications 10 à 15, dans lequel l'unité de communication (36) est une unité de communication radio.

17. Véhicule selon la revendication 16, dans lequel l'unité de commande (30) est conçue pour identifier une identité dudit réseau sans fil, comparer l'identité à un paramétrage de préférences réseau et déterminer si le message doit être transmis ou non en fonction de la comparaison.

18. Centre d'assistance aux véhicules (16) destiné à échanger des données relatives à un véhicule avec un véhicule (10) via un réseau sans fil (14) et comprenant un appareil de messagerie (40) selon l'une quelconque des revendications 10 à 15.

19. Produit de programme informatique (92) destiné à permettre la transmission de données relatives à un véhicule entre un véhicule (10) et un centre d'assistance aux véhicules (16) via un réseau sans fil (14) et comprenant un code de programme informatique destiné à faire exécuter à un ordinateur, lorsque ledit code de programme informatique y est chargé, les étapes consistant à :
prévoir un champ d'allocation (AF) comprenant des indicateurs d'allocation paramétrables (F1, F2, F3, F4, F5, ..., Fn), correspondant chacun à un type différent de données à transmettre entre le véhicule et le centre d'assistance aux véhicules,
paramétrer au moins un indicateur d'allocation (F2, F4, F5, Fn) dans ledit champ d'allocation pour un type de données correspondant (D2, D4, D5, Dn),
créer un segment de données (DS ; HR, OR) comprenant au moins ledit champ d'allocation et un certain nombre de champs de données (DF1, DF2, DF3, ..., DFm), lequel nombre est basé sur ledit paramétrage des indicateurs d'allocation,
allouer chaque champ de données à un type de données (D2, D4, D5, Dn) en fonction dudit paramétrage des indicateurs d'allocation,
remplir chaque champ de données avec des données du type alloué, et
commander au moins la transmission d'un message de données (M1 ; M2) entre le véhicule et le centre d'assistance aux véhicules, comprenant au moins ledit segment.

20. Signal (M1 ; M2) transmettant des données relatives à un véhicule entre un véhicule (10) et un centre d'assistance aux véhicules (16) via un réseau sans fil (14), ledit signal comprenant :
au moins un segment de données (DS ; HS, OR) comprenant
un champ d'allocation (AF) ayant des indicateurs d'allocation paramétrables (F1, F2, F3, F4, F5, ..., Fn) correspondant à des types différents de données qui peuvent être transmises entre le véhicule et le centre d'assistance aux véhicules, où au moins un indicateur d'allocation (F2, F4, F5, Fn) dudit champ d'allocation a été paramétré pour un type de données correspondant (D2, D4, D5, Dn), et
un certain nombre de champs de données (DF1, DF2, DF3, ..., DFm), lequel nombre est basé sur ledit paramétrage des indicateurs d'allocation, et chaque champ de données ayant été alloué à un type de données (D2, D4, D5, Dn) et rempli de données de ce type en fonction dudit paramétrage des indicateurs d'allocation.
